# EUROPEAN PATENT APPLICATION

(11) **EP 0 747 912 A2**
(43) Date of publication of application: **11.12.1996**
(21) Application number: 96108829.1
(22) Date of filing: 03.06.1996
(51) Int. Cl.: H01C 17/065

(54) **Thick film conductive paste composition**

(30) Priority: 05.06.1995 JP 160123/95
(71) Applicant: E.I. DU PONT DE NEMOURS AND COMPANY, Wilmington Delaware 19898 (US)
(72) Inventor: Inaba, Akira, Midori-ku, Yokohama-shi, Kanagawa, 226 (JP); Kuno, Hideoki, Yokohama-shi, Kanagawa, 224 (JP)
(74) Representative: von Kreisler, Alek, Dipl.-Chem.

(57) **Abstract**

This invention is directed to a thick film conductive paste composition comprising conductive paste, polymer binder and at least one organic additive being selected form the group of amidosulfuric metallic salt, higher fatty acid metallic salt and metal resinate utilized for forming termination of chip resistor without an occurrence of swelling and/or cracks in the superimposed area of the termination and resistor.

## Description

### FIELD OF INVENTION

This invention relates to screen-printable thick film conductive paste compositions, and especially thick film conductive paste compositions that are printed, dried and fired onto an insulating substrate such as alumina in such a way as to overlap both ends of a resistor layer making up a chip resistor and thereby form an electrode layer, which compositions reduce the tendency for the cracking, swelling and the like that occur at the area of overlap between the electrode and the resistors and at the periphery thereof, during electrode formation.

### BACKGROUND OF INVENTION

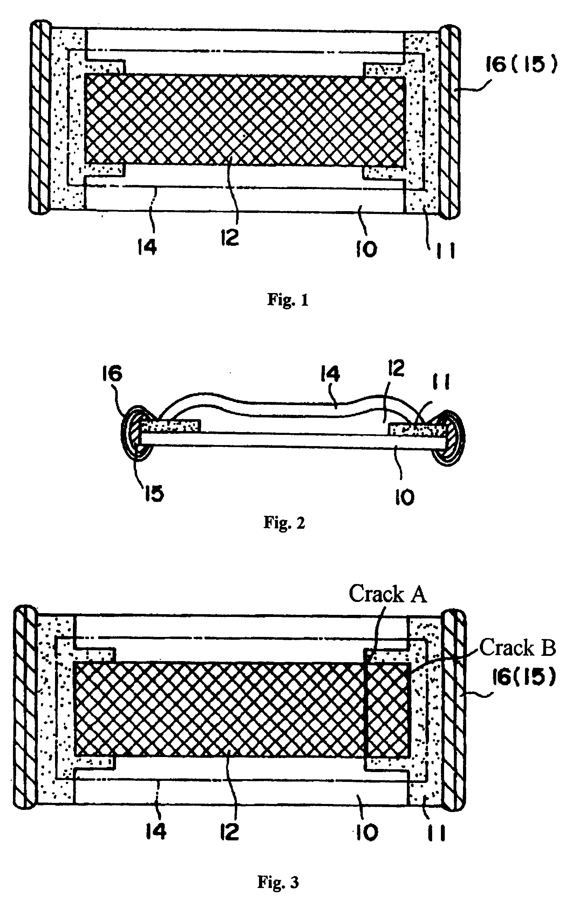

Chip resistors are fabricated by printing, drying and firing a conductive paste containing metals such as Ag or alloys of Ag and Pd at both ends of an insulating substrate 10 made of alumina or the like, as shown in Figs. 1 and 2, so as to provide a pair of electrode layers 11; printing, drying and firing a resistance paste containing ruthenium oxide or the like in a manner that bridges the interval between this pair of electrode layers 11 so as to provide a resistor layer 12; then providing a protective layer 14 that covers the resistor layer 12. More specifically, a chip resistor is made by successively forming a nickel plating layer and a solder plating layer, for example, and thus providing a plating layer 16, on the exposed portion of an electrode layer 11 that is not covered by protective layer 14 and on the electrodes 15 at the ends of the substrate.

Each of the layers is either separately printed, dried and fired ("separate firing"), or several layers are printed, dried, then fired together ("simultaneous firing"). The layers are produced by printing a thick film paste using a screen printer, drying the layer at a low temperature of no more than 200°C and thereby removing the volatile solvent, then firing the layer at a high temperature of at least 600°C, in this way removing all the other ingredients that are not inorganic and thus densifying the inorganic ingredients.

Conductive paste compositions are dispersions of an inorganic solid in a liquid medium phase. This medium phase contains primarily organic polymers, solvents and various other additives. The inorganic solid can be a conductive substance or, where necessary, a derivative. The organic polymer within the thick film paste should transmit the precise printing rheology and provide a dried printed element having good adhesion to the base before firing, along with imparting to the unfired composition sufficient strength to keep the unfired composition from cracking or chipping during handling before firing.

The hope is that, along with obtaining these desirable capabilities, the error in the resistance value of the chip resistor ultimately fabricated relative to a given value can be reduced and good firing properties can be imparted.

However, in prior art conductive paste compositions, there exists the problem in the chip resistor formation step, swelling arises in the area of overlap between the resistor layer and the electrode layer on account of the firing step. Because the interior of this swelling is hollow, it bursts on account of sudden thermal changes due to solder at the time of surface mounting onto a glass epoxy substrate, an alumina substrate or the like, or it bursts on account of the impact when mounted onto another base. Hence, one problem with this swelling is that it alters the resistance value properties of the resistor layer in the chip resistor.

Moreover, in the formation step in which simultaneous firing is carried out, a difference in sintering shrinkage between the resistor layer and the electrode layer arises in the firing step, which ends up resulting in the formation of cracks in the resistor layer itself at the area of overlap between the resistor layer and the electrode layer, or in the nearby electrode layer positioned peripheral to the resistor layer. This cracking has an adversed influence on the resistance value characteristics of the chip resistor obtained.

Accordingly, the object of this invention is to provide conductive paste compositions which eliminate the cracking and swelling in the area of overlap between the resistor layer and the electrode layer that causes changes in the resistance values of the chip resistor during the firing step in the chip resistor fabrication process, and which are able to produce chip resistors capable of attaining a given resistance value following a formation process that passes through a firing step.

The object of this invention was achieved by means of a new thick film conductive paste composition containing an electrically conductive substance and a polymer binder, the composition is characterized by containing at least one additive, or a mixture of two or more, selected from among the group composed of the metal salts of higher fatty acids, the metal salts of amidosulfuric acids, and metallic resinates.

### SUMMARY OF THE INVENTION

This invention is directed to thick film conductive paste compositions containing a conductive substance and a polymer binder, and also containing one organic additive, or a mixture of two or more, selected from the group consisting of the metal salts of higher fatty acids, the metal salts of amidosulfuric acid, and metallic resinates.

The thick film conductive pastes obtained from a conductive substance and a polymer binder, one organic additive, or a mixture of two or more, selected from a group consisting of the metal salts of higher fatty acids, the metal salts of amidosulfuric acids, and metallic resinates, is utilized where an electrode layer is formed so as to overlap both ends of a resistor layer provided on an insulating substrate making up a chip resistor, the occurrence of cracking and swelling at this area of overlap is resolved and the properties required of thick film conductive paste compositions are maintained.

### BRIEF DESCRIPTION OF THE DRAWINGS

Fig. 1 is a top view showing the general structure of a chip resistor. Fig. 2 is a cross-sectional diagram showing the general structure of a chip resistor. Fig. 3 is a diagram for explaining the method of testing the crack formation state that is resolved by the present invention in cases where the chip resistor shown in Fig. 1 is formed using a thick film paste composition.

### (Explanation of the Symbols)

- 10--: insulating substrate
- 11--: electrode layer
- 12--: resistor layer
- 14--: protective layer
- 15--: end electrode
- 16--: plating layer

### DETAILED DESCRIPTION OF THE INVENTION

### Conductive Substance

In the conductive paste of the present invention, the conductive substance is a base metal or a noble metal. Suitable conductive metals include Pd, Ag, Au, Pt, Cu, Ni, and mixtures or alloys thereof. This also encompasses precursors of substances with electronic capabilities that are conductive metals.

### Organic Medium

The main purpose of the organic medium generally is to act as a medium for dispersing the finely divided solids of a composition in a form that enables easy application onto ceramics or other base materials. Accordingly, the organic medium must be, first of all, a dispersible liquid that has a suitable degree of stability. Secondly, the rheological properties of the organic medium must impart good qualities to the dispersion.

Most thick film comopositions are applied to the base material by a screen-printing process. For this reason, these compositions must have a suitable viscosity that allows them to easily pass through the screen. In addition, they are treated immediately after printing and, therefore, must be thixotropic so as to provide a good resolution. The rheological properties are the most important, but it is preferable that the organic medium be formed so as to provide the solid and the base material with suitable wettability, a good drying rate, sufficient dry film strength to endure rough handling, and good firing properties. It is also important that the appearance of the fired compositions be satisfactory.

Based on these criteria, a wide variety of inert liquids have hitherto been used as the organic medium. The organic media in most thick film compositions are typically solutions of a resin with a solvent, and often a solvent solution containing both a resin and a thixotropic agent. The solvent generally boils within a range of 130-350°C.

The resin most frequently used for this purpose is ethyl cellulose(EC). However, resins such as ethyl hydroxy ethyl cellulose, wood rosin, mixtures of ethyl cellulose and phenol resin, the polymethacrylates of lower alcholos, and the monobutyl ether of ethylene glycol monoacetate have also been used.

The weight ratio of these conductive ingredients and resin ingredients should preferably be such that, letting the sum of the conductive ingredient and the resin ingredient (including the solvent) be 100 wt%, the conductive ingredient is 90-50 wt% and the resin ingredient (including the solvent) is 10-50 wt%.

In addition to the conductive ingredient and the resin ingredient, the conductive paste compositions of this invention may also contain, per 100 wt% of the conductive ingredient, one organic additive, or a mixture of two or more, selected from the group consisting of 0.3-7 wt% of B₂O₃-SiO₂-PbO glass frit and inorganic oxides such as CuO and ZnO, 0.05-10 wt% of the metal salts of higher fatty acids, the metal salts of amidosulfuric acid, and metallic resinates.

### Organic Additives

The organic additives used in the conductive paste compositions of this invention are organic substances such as stearic acid, oleic acid, palmitic acid, amidosulfuric acid or resinates, and salts with inorganic substances that chemically bond with these organic substances. Organic substances suitable for this invention are preferably the metal salts of C₁₀ or higher fatty acids, and most preferably the metal salts of stearic acid, oleic acid, palmitic acid or the like. Of the metals that form salts with stearic acid and the like, examples of those preferable to this invention include magnesium (Mg), strontium (Sr), barium (Ba), titanium (Ti), zirconium (Zr), niobium (Nb), tantalum (Ta), chromium (Cr), tungsten (W), iron (Fe), ruthenium (Ru), cobalt (Co), rhodium (Rh), nickel (Ni), aluminum (Al), tin (Sn) and platinum (Pt).

In addition to fatty acids such as stearic acid, the metal salts of amidosulfuric acid (sulfamic acid) can also be selectively used as organic additives in the present invention.

The content of these organic additives, relative to the entire paste composition, varies within a range of 0.05-10 wt%. The organic additive content in this invention is preferably 0.1-4 wt%.

### Other Ingredients in the Medium

The solvents that are widely used in thick film applications are terpenes, such as α- or β-terpineol, or mixtures thereof, and other solvents accompanying these, examples of which include kerosine, dibutyl phthalate, butyl carbitol, dibutyl carbitol, carbitol acetate, butyl carbitol acetate, hexylene glycol and high boiling alcohols and alcohol esters. These and various other solvents are combined and formulated such that the required conditions can be obtained for the desired viscosity and volatility for each application.

These organic additives may be mixed into and contained within the conductive paste compositions of the present invention. In addition, depending on the application, various commonly used substances such as plasticizers can be added to the conductive paste compositions of this invention.

The ratio of organic solvents to the solids in the dispersion can be greatly varied. This also varies according to the method by which the dispersion is applied and the type of organic medium used. Generally, in order to achieve a good coverage, the dispersion is made to contain complementary amounts of the solid (60-90 wt%) and the organic solvent (40-10 wt%). A dispersion such as this generally has a semi-fluid consistency, and is normally called a "paste".

The paste can be produced with good results using a three-roll kneader. The amount of organic solvent (vehicle) used is determined primarily by the ultimate desired viscosity of the formultion and the printing thickness.

### Test Procedure

As shown in Fig. 3, the method for observing the swelling and cracking A (joint line of resistor/electrode overlap portion) and the cracking B (periphery of resistor/electrode overlap portion) of the electrode/resistor overlap portion of the chip resistor consists of printing and drying the conductive paste onto the alumina substrate so as to control the fired film thickness to 10 µm, printing/drying the resistance paste so that it overlaps onto the conductor dried film, simultaneously firing both pastes at 850°C using a belt furnace, then carrying out observation using a metallurgical microscope.

The adhesive strength was determined by printing and drying conductive paste onto an alumina substrate in a 2-mm square pattern, firing at 850°C, soldering with 0.8-mm wire, and measuring the peel strength.

### DESCRIPTION OF THE PREFERRED EMBODIMENT

Embodiments of the present invention are described below, although this invention is not limited to these. The mixing ratios of the conductive ingredients, binders and organic additives in these examples are indicated in weight percent (wt%).

### Examples 1-14

The conductive paste compositions according to the present invention in Examples 1-12, and the conductive paste compositions in Examples 13 and 14 serving as comparative examples were produced in the same way from the ingredients shown in Table 1. [The method used] was that described in Example 1.

### Example 1

The composition contains 74 wt% of silver powder, 0.5 wt% of palladium powder, 0.57 wt% of glass frit, 0.3 wt% of aluminum stearate, and 25.2 wt% of an organic medium. Along with inorganic solids, this composition contains an organic vehicle in a solid/vehicle weight ratio of 75.5/24.5.

The vehicle consists of 10 parts ethyl cellulose and 90 parts β-terpineol.

This composition was printed onto an alumina substrate by means of a screen-stencil technique to a fired thickness of about 10µm, and a resistor paste was printed so as to bridge the conductive paste composition electrode layers positioned at both ends. The electrode layer and resistor layer on the substrate thus obtained was dried at an elevated temperature, such as 120-150°C, for about 10 minutes, then fired in air at a peak temperature of about 850°C using a belt furnace. As a result of firing, it is apparent from Table 1 that when chip resistors were formed in which just the protective layer was chipped using a conductive paste composition according to this invention, the problems of swelling and cracking as a result of firing were resolved.

From the results of Examples 1-6, it is apparent that the problem of cracking is improved by increasing the aluminum stearate to 0.3-10 wt%, according to the amount of such addition.

From the results in Examples 3 and 7-11, the degree of improvement in the problems of swelling and cracking differs depending on the type of metal that chemically bonds with the stearic acid serving as the higher fatty acid, and it is apparent that, compared with the use of metals salts with aluminum and cobalt, the improvement in the problem of swelling is relatively poor when metal salts with copper or zinc are used. However, compared with prior art compositions (Comparative Example 13) in which the organic additives according to this invention are not used, there is adequate improvement in the problems of swelling and cracking.

From the results of Examples 2, 13 and 14, even when alumina powder having a particle size distribution of 1-4 µm is contained as the inorganic additive, improvements in the problems of swelling and cracking, such as those achieved in cases where conductive paste compositions containing the organic additives according to this invention are used, are impossible.

Moreover, it is apparent from the results of Examples 5, 6, 12 and 13 that the conductive paste compositions according to this invention are able to provide good bonding properties (adhesion) to the substrate.

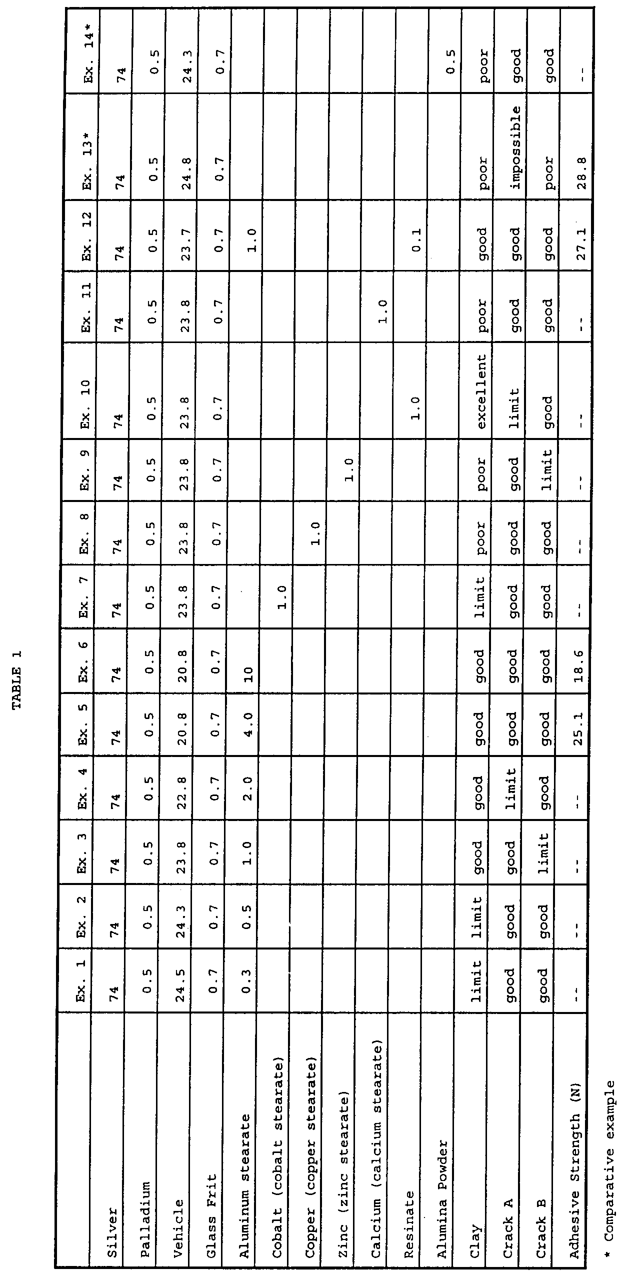

According to this invention, the organic additives that have been added release outside of the layer the gases that evolve due to chemical reactions in the resistor paste and conductor paste firing step and have hitherto been the cause of swelling, thereby acting to suppress swelling. Moreover, by causing the shrinkage of the compositions to change linearly within a temperature range of 450-650°C, this is able to relieve stress upon the resistor layer due to electrode layer shrinkage, thereby making it possible to suppress cracking at the peripheral portion of the overlap between the resistor layer and the electrode layer.

## Claims

1. A thick film conductive paste composition containing an electrically conductive substance and a polymer binder, which composition is characterized by containing at least one organic additive, or a mixture of two or more, selected from among the group composed of the metal salts of higher fatty acids, the metal salts of amidosulfuric acids, and metallic resinates.

2. A composition according to claim 1, whereby said organic additive is the metal salt of a higher fatty acid.

3. A composition according to claim 1 or 2, whereby the content of said organic additive is 0.05-10 wt%.
